# EUROPÄISCHE PATENTANMELDUNG

(11) **EP 4 524 320 A1**
(43) Veröffentlichungstag der Anmeldung: **19.03.2025**
(21) Anmeldenummer: 23196851.2
(22) Anmeldetag: 12.09.2023
(51) Int. Cl.: D21B 1/02, D21B 1/38, D21C 5/00, A23B 7/154

(54) **VERFAHREN ZUR LAGERUNG EINES FRISCHEN ERNTEGUTS, VERFAHREN ZUR BEHANDLUNG EINES EINGELAGERTEN ERNTEGUT-GEMISCHS, VERFAHREN ZUR HERSTELLUNG EINES FASERSTOFFS-GEMISCHS, SOWIE SYSTEME ZUR DURCHFÜHRUNG DIESER VERFAHREN**

(71) Anmelder: Energiepark Hahnennest GmbH & Co.KG, 88356 Ostrach (DE)
(72) Erfinder: Metzler, Thomas, 88356 Ostrach (DE)
(74) Vertreter: Patentanwälte und Rechtsanwalt Weiß, Arat & Partner mbB

(57) **Zusammenfassung**

Ein System zur Herstellung eines Faserstoffs-Gemischs umfasst einen Lagerungs-Behälter und eine Einrichtung zur Durchführung einer ersten teilweisen Entwässerung.

## Beschreibung

### Technisches Gebiet

Die Erfindung betrifft Verfahren und ein System zur Lagerung eines frischen Ernteguts, zur Behandlung eines eingelagerten Erntegut-Gemischs sowie zur Herstellung eines Faserstoffs-Gemischs gemäss den unabhängigen Ansprüchen.

### Stand der Technik

Derartige Verfahren und Systeme sind bekannt und gebräuchlich.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Ansprüche. Vorteilhafte Ausgestaltungen sind in den abhängigen Ansprüchen beschrieben.

Gemäss der vorliegenden Erfindung umfasst ein Verfahren zur Lagerung eines frischen Ernteguts einer krautigen Pflanze folgende Schritte:
Einbringen des Ernteguts in einen Lagerungs-Behälter,
Einbringen einer Base in den Lagerungs-Behälter,
Lagerung des Erntegut-Gemischs umfassend zumindest das Erntegut und die Base,
wobei ein pH-Wert im Lagerungs-Behälter über eine Dauer der Lagerung hinweg durch Auswahl der Base oder durch weitere Zugabe von Base während der Dauer der Lagerung auf zumindest pH 8,0 gehalten wird.

Im Rahmen der vorliegenden Erfindung kann stets daran gedacht sein, die pH-Messung stets bei derselben Temperatur, beispielsweise bei 20°C durchzuführen. Falls nötig kann die zu messende Probe vor der Messung temperiert werden.

Es kann daran gedacht sein, neben dem Erntegut und der Base auch Wasser in den Lagerungs-Behälter einzubringen. Wie nachstehend noch näher erläutert, liegt ein Trockensubstanz-Gehalt im Lagerungs-Behälter vorzugsweise bei maximal 15 Prozent, was nötigenfalls durch Wasserzugabe eingestellt werden kann.

Es kann daran gedacht sein, dass der pH-Wert im Lagerungs-Behälter über eine Dauer der Lagerung hinweg durch Auswahl der Base oder durch weitere Zugabe von Base während der Dauer der Lagerung auf zumindest 8,5, noch bevorzugter auf zumindest 9,0 gehalten wird.

Einerseits kann also beispielsweise über Vorversuche ermittelt werden, ob die Kombination aus Erntegut und Base einen über die gewünschte Lagerungsdauer stabilen pH-Wert oder jedenfalls einen pH-Wert oberhalb eines gewünschten Grenzwerts von beispielsweise 8,0 aufweist. Andererseits kann der pH-Wert während der Lagerungsdauer überwacht und nötigenfalls nach oben korrigiert werden, wenn er beispielsweise auf 8,0 oder 8,5 oder 9,0 abgesunken ist.

Es kann daran gedacht sein, den pH-Wert im Lagerungs-Behälter zu Beginn der Lagerung auf zumindest 10,0 einzustellen.

Vorzugsweise wird der pH-Wert zu Beginn der Lagerung auf zumindest 11,0 oder zumindest 12,0 eingestellt. Üblicherweise wird ein pH-Wert von maximal 13,5, vorzugsweise von maximal 13,0 eingestellt.

An die vorbeschriebene Lagerung kann sich ein Verfahren zur Behandlung des eingelagerten Erntegut-Gemischs anschliessen, welches folgende Schritte umfasst:
erste teilweise Entwässerung des Erntegut-Gemischs,
wobei die erste teilweise Entwässerung eine basische flüssige Phase und ein teilweise entwässertes Erntegut-Gemisch liefert.

Vor der ersten teilweisen Entwässerung erfolgt vorzugsweise ein Entnehmen des Erntegut-Gemischs aus dem Lagerungs-Behälter. Die erste teilweise Entwässerung findet also vorzugsweise nicht in dem Lagerungs-Behälter statt, sondern in einer separaten Einrichtung zur Durchführung der ersten teilweisen Entwässerung ("erste Entwässerungs-Einrichtung"). Vorzugsweise wird das Erntegut-Gemisch aus dem Lagerungs-Behälter in die erste Entwässerungs-Einrichtung gepumpt.

Das frische Erntegut ist vorzugsweise ein nicht konserviertes Erntegut, welches also insbesondere nicht getrocknet oder über einen längeren Zeitraum siliert wurde.

Vorzugsweise wird das frische Erntegut, wie bereits beschrieben, ausschliesslich durch die Lagerung bei einem anfänglichen pH-Wert von zumindest 10,0 konserviert, wobei dieser pH-Wert während der Lagerungsdauer vorzugsweise auf über 8,0 gehalten wird. Andere Konservierungsmethoden wie eine Silage oder eine Trocknung kommen vorzugsweise nicht zum Einsatz.

Hierbei meint der "anfängliche" pH-Wert denjenigen, welcher unmittelbar nach dem Einbringen von Base und Erntegut im Lagerungs-Behälter vorliegt, also insbesondere innerhalb des ersten Tages nach Einbringen von Base und Erntegut, bevorzugt innerhalb der ersten 6 Stunden nach Einbringen von Base und Erntegut, und besonders bevorzugt innerhalb von 60 Minuten nach dem Einbringen von Base und Erntegut. Dieser pH-Wert kann im vorgenannten Zeitraum auch, beispielsweise durch Zugabe weiterer Base, schrittweise eingestellt werden.

Beispielsweise kann das Erntegut mit einer ersten Menge der Base in den Lagerungs-Behälter eingebracht werden. Nach einer gewissen Zeit, während der das Erntegut-Gemisch im Lagerungs-Behälter vorzugsweise mittels eines im Lagerungs-Behälter vorhandenen Rührwerks gerührt wird, so dass sich ein stabiler pH-Wert einstellen kann, kann der pH-Wert ermittelt werden. Ist er zu niedrig, kann er, nötigenfalls mehrfach, durch Zugabe weiterer Base erhöht werden.

Das frische Erntegut wird vorzugsweise zeitnah nach der Ernte, welche bspw. durch Mähen erfolgen kann, in den Lagerungs-Behälter eingebracht. Das frische Erntegut kann im Wesentlichen unmittelbar nach der Ernte, d.h. insbesondere ohne weitere Behandlungsschritte in den Lagerungs-Behälter eingebracht werden. Hierbei kann "zeitnah" einen Zeitraum von einigen Stunden bis wenigen Tagen, vorzugsweise einen Zeitraum von deutlich unter einem Tag, besonders bevorzugt einen Zeitraum von wenigen Stunden nach der Ernte umfassen.

Eine krautige Pflanze ist eine Pflanze, welche im Wesentlichen nicht verholzt, d.h. im Wesentlichen kein sekundäres Dickenwachstum zeigt. Besonders bevorzugt kann im Rahmen der vorliegenden Erfindung an folgende Pflanzen gedacht sein: Die Pflanzengattung Miscanthus (Gattung innerhalb der Familie der Süssgräser), die Pflanzenart Silphium perfoliatum (Duchwachsene Silphie), die Pflanzengattung Hanf (Gattung innerhalb der Familie der Hanfgewächse) oder die Pflanzengattung Hopfen (Gattung innerhalb der Hanfgewächse). Weiterhin kann an Pflanzen aus der Familie der Bananengewächse sowie an Brennnesseln (Gattung innerhalb der Brennnesselgewächse) gedacht sein. Besonders bevorzugt werden vor allem oder ausschliesslich die oberirdisch gewachsenen Pflanzenteile der krautigen Pflanze im Rahmen der vorliegenden Erfindung verarbeitet.

Die in den Lagerungs-Behälter einzubringende Base kann als Feststoff oder Flüssigkeit vorliegen. Beispielsweise kann an Alkali- oder ErdalkalimetallHydroxide als Feststoff oder beispielsweise wässrige Lösung gedacht sein. Es kann auch an andere Basen gedacht sein, beispielsweise Metalloxide oder Carbonate. Weitere Basen kommen in Betracht, ferner können auch Gemische mehrerer Basen als Feststoff oder Flüssigkeit eingesetzt werden.

Abhängig von einem Trockensubstanz-Gehalt des Erntegut-Gemischs in dem Lagerungs-Behälter kann daran gedacht sein, neben der Base auch Wasser oder eine wässrige Lösung zuzugeben.

Der pH-Wert im Lagerungs-Behälter kann während der gesamten Lagerungsdauer vorzugweise zumindest 8,0, noch bevorzugter 8,5, noch bevorzugter zumindest 9,0 betragen. In allen Fällen liegt der pH-Wert vorzugsweise unter 13,5, noch bevorzugter unter 13.0.

Bei der Lagerung können neben dem Erntegut und der Base weitere Stoffe in dem Lagerungs-Behälter zugegen sein.

Der Lagerungs-Behälter kann ein Rührwerk umfassen.

Eine "Entwässerung" meint im Rahmen der vorliegenden Erfindung stets vorzugsweise eine Fest-Flüssig-Trennung, welche mit verschiedenen Mitteln bewirkt werden kann. Hierbei kann jede dem Fachmann bekannte Einrichtung zur Fest-Flüssig-Trennung zum Einsatz kommen.

Bei der ersten teilweisen Entwässerung wird kein "reines" Wasser abgetrennt, sondern üblicherweise eine wässrige basische Lösung. Dasselbe gilt auch für eine zweite und eine dritte Entwässerung.

Die "erste" teilweise Entwässerung kann auch die einzige Entwässerung sein. Optional erfolgt zumindest eine zweite teilweise Entwässerung.

Die Lagerung bei einem pH-Wert von anfänglich 11 und während der Lagerungs-Dauer zumindest 8,0 kann mehrere Vorteile bewirken. Einerseits ermöglicht die Lagerung bei diesem alkalischen pH-Bereich eine Konservierung des Ernteguts, welches bis zu 12 Monate im Lagerungs-Behälter verbleiben kann, ohne zu verderben oder anderweitig in einen nicht mehr verarbeitbaren Zustand überzugehen. Es kann angedacht sein, dass nach dem erstmaligen Einbringen des Ernteguts in den Lagerungs-Behälter eine zweite Charge oder Portion eines frischen Ernteguts in den Lagerungs-Behälter eingebracht wird. Diese zweite Charge oder Portion kann beispielsweise aus einer zeitlich später erfolgten Ernte stammen, welche beispielsweise wenige Tage oder Wochen nach der Ernte erfolgt, welche das bereits eingebrachte Erntegut (sozusagen die erste Charge oder Portion) lieferte.

Weiterhin kann durch die basische Lagerung in den auf die Lagerung folgenden Schritten auf die Zugabe einer Base verzichtet oder die Menge entsprechend reduziert werden, falls in einem der nachfolgenden Schritte die Zugabe einer Base vorgesehen ist. Beispielsweise kann bei einem basischen Aufschluss-Schritt, insbesondere einem Dampfdruckaufschluss-Schritt, der sich an die Lagerung und die erste teilweise Entwässerung anschliessen kann, zumindest weniger Base erforderlich sein, als dies bei bekannten Verfahren ohne basische Lagerung der Fall ist. Das Erntegut-Gemisch, welches wie vorstehend beschrieben gelagert und teilweise entwässert wurde, kann, insbesondere nach einem weiter unten beschriebenen Aufschluss, zur Herstellung von Papier, Pappe, Karton oder dergleichen verwendet werden. Hierbei kann die basische Lagerung bewirken, dass ein sich ansonsten oftmals einstellender unangenehmer Geruch des Papiers, der Pappe, etc. nicht auftritt. Ein unangenehmer Geruch kann beispielsweise auftreten, wenn die Lagerung bei einem zu niedrigen pH-Wert durchgeführt wird. Meist sind mikrobielle Prozesse Grund für die Bildung unangenehm riechender Substanzen, wobei diese mikrobiellen Prozesse bei pH-Werten oberhalb von 8,0 und insbesondere oberhalb von 8,5 und besonders 9,0 nicht oder nur in sehr vermindertem Umfang stattfinden.

Während vor dem Aufschluss ein Erntegut-Gemisch vorliegt, wird das Gemisch nach dem Aufschluss als Faserstoff-Gemisch bezeichnet. Dies gilt auch dann, wenn das Erntegut-Gemisch durch die basischen Lagerungsbedingungen bereits teilweise aufgeschlossen wurde, was im Rahmen der vorliegenden Erfindung denkbar ist.

Während der Lagerung kann ein Trockensubstanz-Gehalt des Erntegut-Gemischs beispielsweise zwischen 1 Prozent und 15 Prozent liegen. Vorzugsweise ist der Trockensubstanz-Gehalt möglichst hoch, um einen hohen Durchsatz und eine hohe Effizienz zu erreichen. Gleichzeitig sollte der Trockensubstanz-Gehalt unterhalb einer Pumpfähigkeits-Grenze liegen. Die Pumpfähigkeits-Grenze liegt üblicherweise bei etwa 15% Trockensubstanz-Gehalt. Es kann an Trockensubstanz-Gehalte während der Lagerung gedacht sein, die zwischen 5 und 15 Prozent, zwischen 5 und 15 Prozent, zwischen 9 und 15 Prozent, zwischen 11 und 14 Prozent, und vorzugsweise bei etwa 12 Prozent liegen. Erfolgt eine Überführung des Erntegut-Gemischs aus dem Lagerungs-Behälter in die erste Entwässerungs-Einrichtung nicht mittels einer Pumpe, sondern auf andere Weise, so kann auch an höhere Trockensubstanz-Gehalte während der Lagerung gedacht sein.

Der Trockensubstanz-Gehalt kann, falls nötig, beispielsweise dadurch erhöht werden, dass die Rückführ-Einrichtung(en) vor der Rückführung die flüssige basische Phase in einem entsprechenden Tank lagern. Es kann auch daran gedacht sein, einen Teil der flüssigen basischen Phase aus zumindest einem dieser Tanks zu entnehmen und anderweitig zu lagern oder zu entsorgen, um den Trockensubstanz-Gehalt zu erhöhen. Üblicherweise erfolgt jedoch eine Rückführung der flüssigen basischen Phase in den Lagerungs-Behälter ohne Entnahme oder anderweitige Entsorgung.

Der Trockensubstanz-Gehalt des Erntegut-Gemischs liegt nach der ersten teilweisen Entwässerung vorzugsweise zwischen 15 und 35 Prozent, beispielsweise zwischen 20 und 30 Prozent.

Es kann daran gedacht sein, dass die basische flüssige Phase, welche im Rahmen der ersten teilweisen Entwässerung anfällt, in den Lagerungs-Behälter rückgeführt wird. Vor dieser Rückführung kann die basische flüssige Phase optional aufbereitet werden. Ein Aufbereiten kann in einem Filtrieren und/oder einer Zugabe einer Base und/oder anderen Schritten bestehen. Ferner kann die basische flüssige Phase vor dieser Rückführung in einem Tank zwischengelagert werden.

Zur Herstellung eines Faserstoff-Gemischs aus dem frischen Erntegut-Gemisch, welches zuvor eingelagert und behandelt wurde, kann daran gedacht sein, dass nach der ersten teilweisen Entwässerung ein Aufschluss des teilweise entwässerten Erntegut-Gemischs stattfindet. Dieser Aufschluss ist vorzugsweise ein gezielter Aufschluss in einer dafür vorgesehenen Vorrichtung oder Einrichtung.

Während oder unmittelbar vor dem Aufschluss kann eine zweite teilweise Entwässerung des Erntegut-Gemischs stattfinden. Die flüssige Phase kann hierbei in den Lagerungs-Behälter rückgeführt und vor der Rückführung optional aufbereitet werden.

Der Aufschluss kann einen Dampfdruckaufschluss (steam explosion) umfassen oder aus einem Dampfdruckaufschluss bestehen. Bei einem Dampfdruckaufschluss wird das aufzuschliessende Erntegut-Gemisch in einem geeigneten druckstabilen Behälter unter basischen Bedingungen erhitzt und der Druck anschliessend schnell abgesenkt, wodurch die Zellverbünde des Gemischs gesprengt werden.

Gemäss der vorliegenden Erfindung kann daran gedacht sein, dass während der Lagerung bei einem pH-Wert von anfänglich zumindest 10,0 und vorzugsweise zumindest 8,0 während der gesamten Lagerungs-Dauer das Erntegut bereits durch die Base teilweise aufgeschlossen wird. Dies ist jedoch nicht zwingend, der teilweise Aufschluss während der basischen Lagerung ist somit optional.

Es kann daran gedacht sein, dass das teilweise entwässerte Erntegut-Gemisch vor dem Aufschluss, d.h. vor dem gezielten Aufschluss nach der ersten teilweisen Entwässerung, in einem Puffer-Behälter zwischengelagert wird.

Wie oben bereits erwähnt kann daran gedacht sein, dass während oder unmittelbar vor dem vorgenannten Aufschluss eine zweite teilweise Entwässerung stattfindet.

Die vorliegende Erfindung umfasst weiterhin ein Verfahren zur Herstellung eines Faserwerkstoffs aus einem Faserstoff-Gemisch, welches wie vorstehend beschrieben erhalten wurde. Das zur Herstellung verwendete Erntegut-Gemisch wurde also vorzugsweise wie oben beschrieben gelagert und anschliessend optional wie ebenfalls oben beschrieben behandelt, beispielsweise entwässert.

Ein Faserwerkstoff ist gemäss der vorliegenden Erfindung vorzugsweise ein Fasern enthaltender oder aus Fasern bestehender Werkstoff. Unter einem Werkstoff wird hierbei ein Werkstoff im weitesten Sinne verstanden. Insbesondere handelt es sich also um einen Stoff, der weder ein Futtermittel noch ein Nahrungsmittel noch ein Wirkstoff ist. Ein Faserwerkstoff kann beispielsweise Papier, Pappe, Karton, ein Faserverbundwerkstoff, ein Dämmstoff, eine MDF-Platte oder dergleichen sein. Es kann im Allgemeinen an sämtliche Werkstoffe gedacht sein, welche von Erzeugern aus der Holzwerkstoffindustrie hergestellt werden, sowie an weitere Fasergüter und Faserformteile.

Im Gegensatz zu einer Lagerung durch Silieren (Silage) oder Trocknung kann das Erntegut-Gemisch aus dem Lagerungs-Behälter gemäss der vorliegenden Erfindung, wo es basisch gelagert wird, im Wesentlichen unmittelbar der ersten Entwässerung zugeführt und anschliessend aufgeschlossen werden.

Neben dem vorstehend beschriebenen **Verfahren** umfasst die vorliegende Erfindung auch das nachstehend beschriebene **System.** Merkmale, welche zuvor in Bezug auf das Verfahren beschrieben wurden, gelten gleichermassen auch für das System und umgekehrt.

Ein **System** zur Lagerung eines frischen Ernteguts umfasst einen Lagerungs-Behälter und eine Einrichtung zur Durchführung einer ersten teilweisen Entwässerung (nachfolgend meist "erste Entwässerungs-Einrichtung"). Das System ist eingerichtet, die Verfahrensschritte gemäss zumindest einer Variante des vorstehend beschriebenen Verfahrens zur Lagerung durchzuführen.

Das System kann eine Rückführ-Einrichtung umfassen, welche die erste Entwässerungs-Einrichtung mit dem Lagerungs-Behälter verbindet und einer Rückführung der abgetrennten basischen flüssigen Phase in den Lagerungs-Behälter dient. Die Rückführ-Einrichtung kann einen Tank zur Lagerung der basischen flüssigen Phase umfassen, wenn diese nicht unmittelbar, sondern zeitlich versetzt in den Lagerungs-Behälter rückgeführt werden soll. Einzelne oder sämtliche Rückführ-Einrichtungen können einen solchen Tank umfassen.

Das System kann eine Vorrichtung zur Durchführung einer zweiten teilweisen Entwässerung und eines Aufschlusses ("Entwässerungs- und Aufschluss-Vorrichtung") umfassen, welche stromabwärts der ersten Entwässerungs-Einrichtung angeordnet ist.

Das System kann eine Rückführ-Einrichtung umfassen, welche die Entwässerungs- und Aufschluss-Vorrichtung mit dem Lagerungs-Behälter verbindet und einer Rückführung der abgetrennten flüssigen Phase in den Lagerungs-Behälter dient.

Abhängig davon, welche der hinsichtlich der Verfahren beschriebenen Schritte in dem vorbeschriebenen System durchgeführt werden, kann dieses als System zur Lagerung eines frischen Ernteguts oder System zur Behandlung des eingelagerten Ernteguts, oder System zur Herstellung eines Faserstoff-Gemischs bezeichnet werden. Insbesondere kann das System also auch die zur Entwässerung und zum Aufschluss nötigen Einrichtungen umfassen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine Prinzip-Skizze einer ersten Variante eines erfindungsgemässen Systems zur Durchführung des erfindungsgemässen Verfahrens,
in Figur 2 eine Prinzip-Skizze einer zweiten Variante eines erfindungsgemässen Systems zur Durchführung des erfindungsgemässen Verfahrens, und
in Figur 3 eine Prinzip-Skizze von Einzelheiten des erfindungsgemässen Systems, welche einer Weiterverarbeitung dienen.

### Ausführungsbeispiel

Ein System gemäss einem Ausführungsbeispiel der vorliegenden Erfindung umfasst einen Lagerungs-Behälter 1. Stromabwärts des Lagerungs-Behälters 1 sind, in der nachfolgenden Reihenfolge, eine Einrichtung zur Durchführung einer ersten teilweisen Entwässerung ("erste Entwässerungs-Einrichtung") 4, ein Puffer-Behälter 7 und eine Vorrichtung zur Durchführung einer zweiten teilweisen Entwässerung und eines Aufschlusses ("Entwässerungs- und Aufschluss-Vorrichtung") 8, 8.1, 8.2 angeordnet.

Eine erste Rückführ-Einrichtung 6.1 verbindet die erste Entwässerungs-Einrichtung 4 mit dem Lagerungs-Behälter 1. Eine zweite Rückführ-Einrichtung 6.2 verbindet die Entwässerungs- und Aufschluss-Vorrichtung 8, 8.1 mit dem Lagerungs-Behälter 1. Beide Rückführ-Einrichtungen 6.1, 6.2 dienen einer Rückführung der abgetrennten basischen flüssigen Phase in den Lagerungs-Behälter 1.

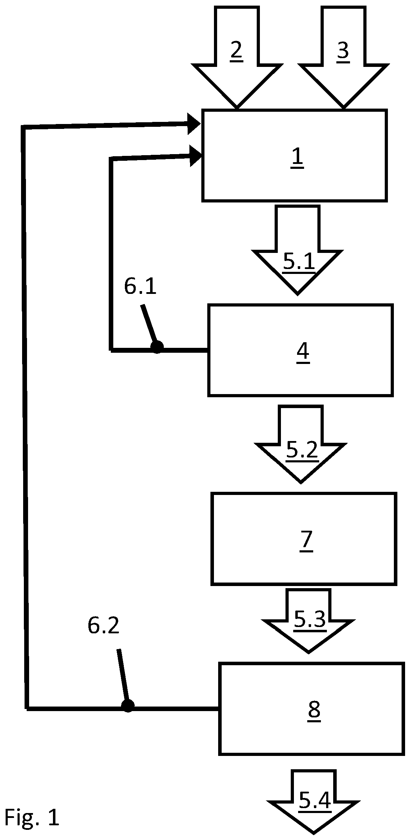

Die Systeme gemäss den Figuren 1 bis 3 dienen der Durchführung der erfindungsgemässen Verfahren. Bevorzugte Varianten der erfindungsgemässen Verfahrens sind nachfolgend beschrieben.

Vorzugsweise erfolgt zunächst ein Einbringen des frischen Ernteguts der krautigen Pflanze 2 sowie der Base 3 in den Lagerungs-Behälter 1. Anschliessend erfolgt eine Lagerung des Erntegut-Gemischs umfassend zumindest das Erntegut und die Base bei einem pH-Wert von anfänglich zumindest 10,0 und während der Lagerungsdauer von zumindest 8,0. Bevorzugt beträgt der pH-Wert anfänglich zumindest 11,0 oder zumindest 12,0. Hierbei meint der "anfängliche" pH-Wert denjenigen, welcher unmittelbar nach dem Einbringen von Base und Erntegut im Lagerungs-Behälter 1 vorliegt. Bevorzugt beträgt der pH-Wert während der Lagerungsdauer zumindest 8,5, noch bevorzugter zumindest 9,0. Die Lagerung kann bis zu 12 Monate andauern, also das gesamte Produktionsjahr abdecken. Nach der Lagerung im Lagerungs-Behälter 1 wird das Erntegut entlang des Pfeils 5.1 in die erste Entwässerungs-Einrichtung 4 überführt. Die erste teilweise Entwässerung liefert eine basische flüssige Phase und ein teilweise entwässertes Erntegut-Gemischs.

Die Entwässerung ist eine Fest-Flüssig-Trennung. Hierbei kann jede dem Fachmann bekannte Einrichtung zur Fest-Flüssig-Trennung zum Einsatz kommen. Die abgetrennte basische flüssige Phase wird über die erste Rückführ-Einrichtung 6.1 in den Lagerungs-Behälter 1 zurückgeführt. Der teilweise entwässerte Rückstand, also das teilweise entwässerte Erntegut-Gemisch, welches nun einen höheren Trockensubstanz-Anteil aufweist, wird entlang des Pfeils 5.2 in den Puffer-Behälter 7 überführt und dort zwischengelagert. Die Zwischenlagerung im Puffer-Behälter 7 dauert üblicherweise maximal einige Stunden.

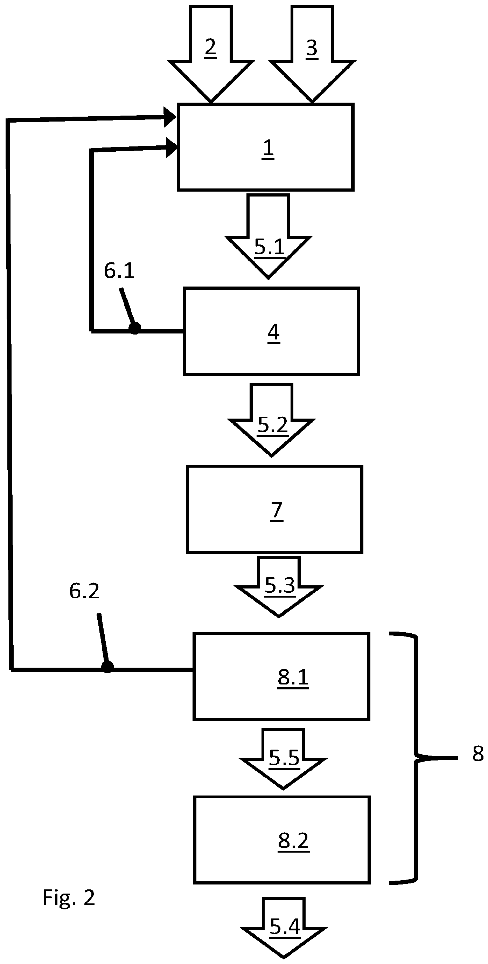

Nach der Zwischenlagerung wird das Erntegut-Gemisch entlang des Pfeils 5.3 in die Entwässerungs- und Aufschluss-Vorrichtung 8 überführt. Hier erfolgt abermals eine teilweise Entwässerung. Die abgetrennte flüssige Phase wird mit Hilfe der Rückführ-Einrichtung 6.2 in den Lagerungs-Behälter 1 zurückgeführt. Der teilweise entwässerte Rückstand, welcher nach dem Aufschluss als Faserstoff-Gemisch bezeichnet wird, wird entlang des Pfeils 5.4 einer in den Figuren 1 und 2 nicht dargestellten Weiterverarbeitung zugeführt.

Die Rückführ-Einrichtungen 6.1, 6.2 bzw. das Rückführen der jeweils abgetrennten flüssigen Phase in den Lagerungs-Behälter 1 bewirkt den Vorteil, dass keine - teilweise stark - basischen Flüssigkeiten entsorgt werden müssen, und verringern den Einsatz von Rohstoffen, insbesondere der Base.

Das Ausführungsbeispiel nach Figur 2 unterscheidet sich von demjenigen nach Figur 1 insofern, als die Entwässerungs- und Aufschluss-Vorrichtung 8 in zwei separate Einrichtungen 8.1, 8.2 aufgeteilt ist. Nach der teilweisen Entwässerung in der ersten Einrichtung 8.1 wird das dort teilweise entwässerte Erntegut-Gemisch in die zweite Stufe 8.2 entlang des Pfeils 5.5 überführt. In dieser zweiten Stufe 8.2 erfolgt der Aufschluss, also die Herstellung des Faserstoff-Gemischs.

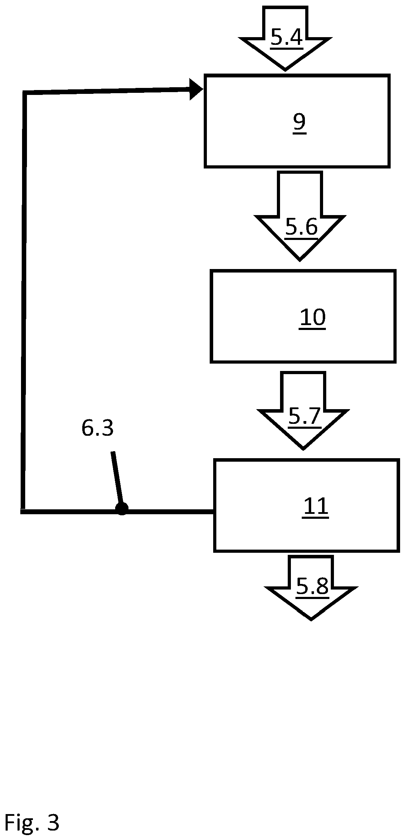

Die Figur 3 zeigt eine Weiterverarbeitung, und schliesst sich somit an die in den Figuren 1 und 2 gezeigten Schritte an. Konkret zeigt die Figur 3 die Herstellung eines Faserstoff-Gemischs zur Herstellung von Papier, Karton, Pappe oder dergleichen.

Das gemäss den Figuren 1 und 2 bearbeitete Faserstoff-Gemisch wird entlang des Pfeils 5.4 in einen Pulper 9, also einen Behälter zur Auflösung des Faserstoff-Gemischs insbesondere für die Papier- oder Karton-Herstellung, eingebracht. Nach der Behandlung im Pulper 9 wird das Faserstoff-Gemisch entlang des Pfeils 5.6 in einen Refiner 10, also eine Einrichtung zur mechanischen Zerkleinerung insbesondere für die Papier- oder Karton-Herstellung, eingebracht. Nach der Behandlung im Refiner 10 wird das Faserstoff-Gemisch entlang des Pfeils 5.7 in eine Einrichtung zur Durchführung einer dritten zumindest teilweisen Entwässerung 11 überführt. An den Material-Transport gemäss Pfeil 5.8 können sich beispielsweise bekannte Schritte einer Papier-Herstellung anschliessen.

Üblicherweise erfolgt anschliessend an den Material-Transport gemäss Pfeil 5.8 zunächst eine Kommissionierung und/oder eine weitere Trocknung und/oder ein Abpacken.

Die Pfeile 5.1, ..., 5.8 definieren eine teilweise "stromabwärts" genannte Richtung.

Obwohl nur einige bevorzugte Ausführungsbeispiele der Erfindung beschrieben und dargestellt wurden, ist es offensichtlich, dass der Fachmann **zahlreiche Modifikationen** hinzufügen kann, ohne Wesen und Umfang der Erfindung zu verlassen. Insbesondere kann an folgende Modifikationen gedacht sein:
Ein Materialtransport entlang der Pfeile 5.1, ..., 5.8 kann jeweils passiv oder aktiv erfolgen. Sofern das jeweils vorliegende Material pumpfähig ist, können geeignete Pumpen eingesetzt werden. Dies gilt beispielsweise für den Transport entlang des Pfeils 5.1. Ansonsten kommen andere Förder-Einrichtungen in Betracht. Pumpen und andere Förder-Einrichtungen für den aktiven Materialtransport sowie Einrichtungen für den passiven Materialtransport sind aus dem Stand der Technik bekannt.

Der Puffer-Behälter 7 kann optional sein. Alternativ kann also auch eine aktive Förderung oder ein passiver Materialtransport das Erntegut-Gemisch unmittelbar von ersten Entwässerungs-Einrichtung 4 in die Entwässerungs- und Aufschluss-Vorrichtung 8 transportieren oder fördern.

Der Kern der vorliegenden Erfindung liegt vorzugsweise in der Anordnung umfassend den Lagerungs-Behälters 1 und die ersten Entwässerungs-Einrichtung 4 sowie dem darin durchgeführten Verfahren. Die auf den Pfeil 5.2 folgenden Schritte und Einrichtungen sind somit bevorzugt, aber optional.

Unmittelbar vor oder während den Rückführungen 6.1, 6.2 kann die zum LagerBehälter 1 zu transportierende flüssige Phase aufbereitet werden. Ein Aufbereiten kann beispielsweise ein Filtrieren und/oder eine Zugabe einer Base und/oder weitere Schritte umfassen.

Der Aufschluss, welcher in der Entwässerungs- und Aufschluss-Vorrichtung 8 stattfindet, kann vorzugsweise einen Dampfdruckaufschluss umfassen oder aus einem solchen Dampfdruckaufschluss bestehen.

Ausgehend von der Darstellung nach Figur 1 kann eine direkte Überführung des Erntegut-Gemischs aus dem Lagerungs-Behälter 1 in die Entwässerungs- und Aufschluss-Vorrichtung 8 angedacht sein. Hierbei wird also auf die erste Entwässerungs-Einrichtung 4 und den Puffer-Behälter 7 verzichtet. Weiter alternativ kann nur auf die erste Entwässerungs-Einrichtung 4 verzichtet werden, so dass das Erntegut-Gemisch von dem Lagerungs-Behälter 1 in den Puffer-Behälter 7 und anschliessend in die Entwässerungs- und Aufschluss-Vorrichtung 8 überführt wird. Die Überführung des Erntegut-Gemischs kann beispielsweise durch eine Pumpe, eine Zuführ-Schnecke oder eine anderweitige geeignete Einrichtung erfolgen.

Beide Rückführ-Einrichtungen 6.1, 6.2 können einen Tank zur Lagerung der basischen flüssigen Phase umfassen, wenn diese nicht unmittelbar, sondern zeitlich versetzt in den Lagerungs-Behälter 1 rückgeführt werden soll.

**Bezugszeichenliste**

| | |
|---|---|
| 1 | Lagerungs-Behälter |
| 2 | Zugabe frisches Erntegut einer krautigen Pflanze |
| 3 | Zugabe einer Base |
| 4 | Einrichtung zur Durchführung einer ersten teilweisen Entwässerung (erste Entwässerungs-Einrichtung) |
| 5 | Förderung / Materialtransport |
| 6 | Rückführ-Einrichtung |
| 7 | Puffer-Behälter |
| 8 | Einrichtung zur Durchführung einer zweiten teilweisen Entwässerung und eines Aufschlusses (Entwässerungs- und Aufschluss-Vorrichtung) |
| 9 | Pulper |
| 10 | Refiner |
| 11 | Einrichtung zur Durchführung einer dritten zumindest teilweisen Entwässerung |
| 12 | |
| 13 | |
| 14 | |
| 15 | |
| 16 | |
| 17 | |
| 18 | |
| 19 | |
| 20 | |
| 21 | |
| 22 | |
| 23 | |
| 24 | |
| 25 | |

## Patentansprüche

1. Verfahren zur Lagerung eines frischen Ernteguts einer krautigen Pflanze, das Verfahren umfassend folgende Schritte:
Einbringen des Ernteguts (2) in einen Lagerungs-Behälter (1),
Einbringen einer Base (3) in den Lagerungs-Behälter (1),
Lagerung des Erntegut-Gemischs umfassend zumindest das Erntegut und die Base,
**dadurch gekennzeichnet,**
**dass** ein pH-Wert im Lagerungs-Behälter (1) über eine Dauer der Lagerung hinweg durch Auswahl der Base oder durch weitere Zugabe von Base während der Dauer der Lagerung auf zumindest pH 8,0 gehalten wird.

2. Verfahren gemäss Anspruch 1, **dadurch gekennzeichnet, dass** pH-Wert im Lagerungs-Behälter (1) zu Beginn der Lagerung auf zumindest 10,0 eingestellt wird.

3. Verfahren zur Behandlung eines gemäss Anspruch 1 eingelagerten Erntegut-Gemischs, das Verfahren umfassend folgende Schritte:
erste teilweise Entwässerung des Erntegut-Gemischs,
wobei die erste teilweise Entwässerung eine basische flüssige Phase und ein teilweise entwässertes Erntegut-Gemisch liefert.

4. Verfahren gemäss Anspruch 3, wobei ein Trockensubstanz-Gehalt des Erntegut-Gemischs während der Lagerung zwischen 1 und 15 Prozent liegt, und wobei der Trockensubstanz-Gehalt des Erntegut-Gemischs nach der ersten teilweisen Entwässerung zwischen 15 und 35 Prozent liegt.

5. Verfahren gemäss einem der Ansprüche 3 oder 4, **dadurch gekennzeichnet, dass** die basische flüssige Phase in den Lagerungs-Behälter (1) rückgeführt und vor der Rückführung optional aufbereitet wird.

6. Verfahren gemäss zumindest einem der vorangehenden Ansprüche, **dadurch gekennzeichnet, dass** das frische Erntegut im Wesentlichen unmittelbar nach der Ernte, insbesondere ohne weitere Behandlungsschritte, in den Lagerungs-Behälter (1) eingebracht wird.

7. Verfahren zur Herstellung eines Faserstoff-Gemischs aus einem frischen Erntegut-Gemisch, welches zuvor gemäss zumindest einem Ansprüche 1 oder 2 gelagert und optional gemäss einem der Ansprüche 3 bis 6 behandelt wurde, **gekennzeichnet durch** einen Aufschluss, vorzugsweise einen Dampfdruckaufschluss, des teilweise entwässerten Erntegut-Gemischs.

8. Verfahren gemäss Anspruch 7, **dadurch gekennzeichnet, dass** das teilweise entwässerte Erntegut-Gemisch vor dem Aufschluss in einem Puffer-Behälter (7) zwischengelagert wird.

9. Verfahren gemäss einem der Ansprüche 7 oder 8, **dadurch gekennzeichnet, dass** während oder unmittelbar vor dem Aufschluss eine zweite teilweise Entwässerung stattfindet.

10. Verfahren zur Herstellung eines Faserwerkstoffs aus einem Faserstoff-Gemisch, welches gemäss einem der Ansprüche 7 bis 9 erhalten wurde.

11. System zur Lagerung eines frischen Erntegut-Gemischs, das System umfassend einen Lagerungs-Behälter und eine Einrichtung zur Durchführung einer ersten teilweisen Entwässerung, wobei das System eingerichtet ist, die Verfahrensschritte gemäss zumindest einem der Ansprüche 1 oder 2 durchzuführen.

12. System nach Anspruch 11, **gekennzeichnet durch** eine Rückführ-Einrichtung (6.1), welche die Einrichtung zur Durchführung der ersten teilweisen Entwässerung (4) mit dem Lagerungs-Behälter (1) verbindet und einer Rückführung der abgetrennten basischen flüssigen Phase in den Lagerungs-Behälter (1) dient.

13. System nach einem der Ansprüche 11 oder 12, **gekennzeichnet durch** eine Vorrichtung zur Durchführung einer zweiten teilweisen Entwässerung und eines Aufschlusses (8), welche stromabwärts der Einrichtung zur Durchführung der ersten teilweisen Entwässerung (4) angeordnet ist.

14. System nach Anspruch 13, **gekennzeichnet durch** eine Rückführ-Einrichtung (6.2), welche die Vorrichtung zur Durchführung einer zweiten teilweisen Entwässerung und eines Aufschlusses (8) mit dem Lagerungs-Behälter (1) verbindet und einer Rückführung der abgetrennten flüssigen Phase in den Lagerungs-Behälter (1) dient.
